# EUROPEAN PATENT APPLICATION

(11) **EP 4 354 691 A1**
(43) Date of publication of application: **17.04.2024**
(21) Application number: 22872013.2
(22) Date of filing: 21.09.2022
(51) Int. Cl.: H02J 7/00, H01R 13/66

(54) **TERMINAL CHARGING SYSTEM, TERMINAL CHARGING METHOD, AND STORAGE MEDIUM**

(30) Priority: 26.09.2021 CN 202111131865
(71) Applicant: ZTE Corporation, Shenzhen, Guangdong 518057 (CN)
(72) Inventor: YU, Bing, shenzhen, Guangdong 518057 (CN)
(74) Representative: Canzler & Bergmeier Patentanwälte Partnerschaft mbB
(86) International application number: PCT/CN2022/120194
(87) International publication number: WO 2023/045967

(57) **Abstract**

The present disclosure provides a terminal charging system, a terminal charging method, and a storage medium, belonging to the field of terminal charging. The terminal charging system comprises: a terminal, which comprises a first signal ground interface, the first signal ground interface being used for signal ground connection of the terminal; a cable, which comprises a second signal ground interface adapted to the first signal ground interface; and a charger, which charges the terminal via the cable; when the terminal is charging, one end of the cable is connected to the power ground of the charger, and the other end of the cable is connected to the signal ground of the terminal via the second signal ground interface and the first signal ground interface.

## Description

### CROSS REFERENCE TO RELATED APPLICATIONS

The present disclosure claims the priority to Chinese Patent Application No. CN202111131865.8 entitled "TERMINAL CHARGING SYSTEM, TERMINAL CHARGING METHOD, AND STORAGE MEDIUM" and filed on September 26, 2021, the contents of which are incorporated herein by reference in their entirety.

### TECHNICAL FIELD

The present disclosure relates to the field of terminal charging technologies, and in particular, to a terminal charging system, a terminal charging method, and a storage medium.

### BACKGROUND

In recent years, with the increase of requirements of users on user experience of terminals such as smart phones, the users desire shorter and shorter charging time of the terminals. In order to meet the demand of the users, the Power Delivery (PD) charging protocol is proposed in the industry for completing the standardization of high-power charging. The increasing demand of high-power charging needs to increase currents output by chargers from 1A-2A to 3A-5A, resulting in an increase of charging currents output by the chargers. Since a signal ground of a terminal and a power ground of the terminal are connected to a common ground, a voltage drop of a signal for PD communication is increased when the currents are increased, so that signal integrity becomes poor, which may finally cause the technical problems such as charging interruption during a charging process.

Thus, how to avoid charging interruption of a terminal during a high-power charging process has become an urgent technical problem to be solved.

### SUMMARY

The present disclosure provides a terminal charging system, a terminal charging method, and a storage medium, and aims to solve the technical problem of charging interruption of a terminal during a high-power charging process.

In a first aspect, the present disclosure provides a terminal charging system, including: a terminal including a first signal ground interface configured to be connected to a signal ground of the terminal; a cable including a second signal ground interface adapted to the first signal ground interface; and a charger which charges the terminal through the cable; and when the terminal is charged, one end of the cable is connected to a power ground of the charger, and the other end of the cable is connected to the signal ground of the terminal through the first signal ground interface and the second signal ground interface which are connected to each other.

In a second aspect, the present disclosure further provides a terminal charging method applied to the above terminal charging system, and the terminal charging method may include: after the charger starts to charge the terminal, detecting a type of the cable; if the cable is a first-type cable, controlling the first switch to be switched on by the first control module, wherein the first-type cable is provided with no first signal ground interface; and if the cable is a second-type cable, controlling the first switch to be switched off by the first control module, controlling the second switch connected to the power ground of the charger to be switched on by the second control module, and controlling the second switch connected to the power ground of the terminal to be switched off by the second control module, wherein the second-type cable is provided with the first signal ground interface and the two second switches located at the two ends of the cable.

In a third aspect, the present disclosure further provides a storage medium for computer-readable storage, wherein the storage medium has stored therein one or more programs that are executable by one or more processors to perform operations of the terminal charging method provided herein.

### BRIEF DESCRIPTION OF DRAWINGS

In order to illustrate the technical solutions of the present disclosure more clearly, drawings for the illustration of the embodiments will be briefly described below. Apparently, the drawings described below are merely for some embodiments of the present disclosure, and other drawings can be derived by those of ordinary skill in the art from the drawings described herein without any creative labor.
FIG. 1 is a schematic diagram illustrating connection between a terminal and a charger in a charging state of the terminal in the existing art.
FIG. 2 is a schematic structural diagram of a terminal charging system according to the present disclosure;
FIG. 3 is a schematic structural diagram of a Universal Serial Bus Type-C (USB Type-C) defined interface;
FIG. 4 is another schematic structural diagram of a terminal charging system according to the present disclosure;
FIG. 5 is another schematic structural diagram of a terminal charging system according to the present disclosure;
FIG. 6 is another schematic structural diagram of a terminal charging system according to the present disclosure;
FIG. 7 is another schematic structural diagram of a terminal charging system according to the present disclosure;
FIG. 8 is a flowchart illustrating a terminal charging method according to the present disclosure;
FIG. 9 is a flowchart of sub-operations of a terminal charging method according to the present disclosure; and
FIG. 10 is a flowchart of a terminal charging process according to the present disclosure.

### DETAIL DESCRIPTION OF EMBODIMENTS

The technical solutions of the present disclosure will be clearly and completely described below with reference to the drawings of the present disclosure. Apparently, the embodiments described herein are merely some embodiments of the present disclosure, rather than all embodiments. All other embodiments, which are derived by those of ordinary skill in the art based on the embodiments in the present disclosure without any creative labor, fall within the scope of the present disclosure.

The flowcharts shown in the drawings are merely for illustration, and do not indicate that all the contents and operations must be included or must be performed in the order described therein. For example, some operations may be separated, combined or partially merged, so that an actual execution order may be changed according to actual situations.

It should be understood that the terms used herein are merely for the purpose of describing specific embodiments but are not intended to limit the present disclosure. As used in the description and the appended claims of the present disclosure, "a", "one" and "the" which indicate a singular form are intended to include a plural form, unless expressly stated in the context.

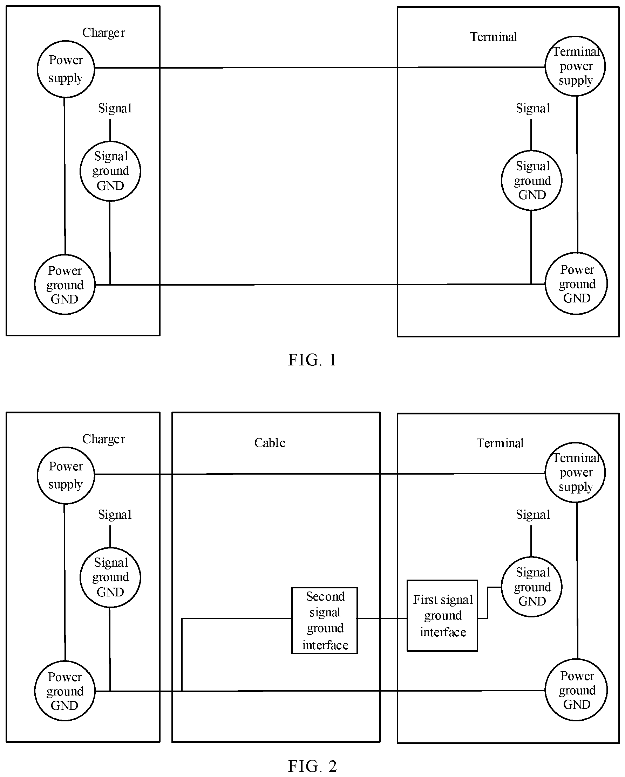

Referring to FIG. 1, FIG. 1 is a schematic diagram illustrating connection between a terminal and a charger in a charging state of the terminal in the existing art.

As shown in FIG. 1, a power ground GND (a wire ground terminal) at the side of a charger is connected to a power ground GND at the side of a terminal through a cable, a signal ground GND at the side of the charger is connected to a signal ground GND at the side of the terminal through a cable, and the signal ground GND and the power ground GND at the side of the charger/the terminal are connected to a common ground. In a charging process of the terminal, a charging current reaches the terminal from the charger through the cable; since the cable inevitably has certain impedance (which tends to increase with the aging of a cable shielding layer), when the charging current is increased, a voltage difference between the signal ground GND at the side of the charger and the signal ground GND at the side of the terminal is accordingly increased, that is, a voltage drop of a communication signal is accordingly increased; and once the voltage drop of the communication signal is too large, charging interruption of the terminal may be caused.

In order to solve the above problem, the present disclosure provides a terminal charging system, a terminal charging method, and a storage medium. The terminal charging method may be applied to the terminal charging system, so as to overcome the problem of charging interruption of the terminal during the charging process.

Some embodiments of the present disclosure are described in detail below with reference to the drawings. The embodiments described below and the features therein may be combined with each other if no conflict is incurred.

Referring to FIG. 2, FIG. 2 is a schematic structural diagram of a terminal charging system according to the present disclosure.

As shown in FIG. 2, the terminal charging system includes a terminal, a cable, and a charger, and the terminal and the charger are electrically connected through the cable. It should be noted that the terminal includes, but is not limited to, a mobile phone, a tablet computer, a wearable device, or other electronic devices.

The terminal includes a terminal power supply, a power ground GND, a signal ground GND, and a first signal ground interface configured to be connected to the signal ground GND of the terminal. The cable includes a second signal ground interface adapted to the first signal ground interface of the terminal, that is, the second signal ground interface is capable of being connected to the first signal ground interface. The charger includes a power supply, a power ground GND, and a signal ground GND, the power supply of the charger is connected to the power supply of the terminal through the cable, the power ground GND of the charger is connected to the power ground GND of the terminal through the cable, and the charger charges the terminal through the cable. When the terminal is charged, one end of the cable is connected to the power ground GND of the charger, and the other end of the cable is connected to the signal ground GND of the terminal through the first signal ground interface and the second signal ground interface which are connected to each other, thus realizing separation of the power ground GND of the terminal from the signal ground GND of the terminal. In this way, even if a charging current is large, a voltage drop of a communication signal does not become too large accordingly, thereby avoiding charging interruption of the terminal.

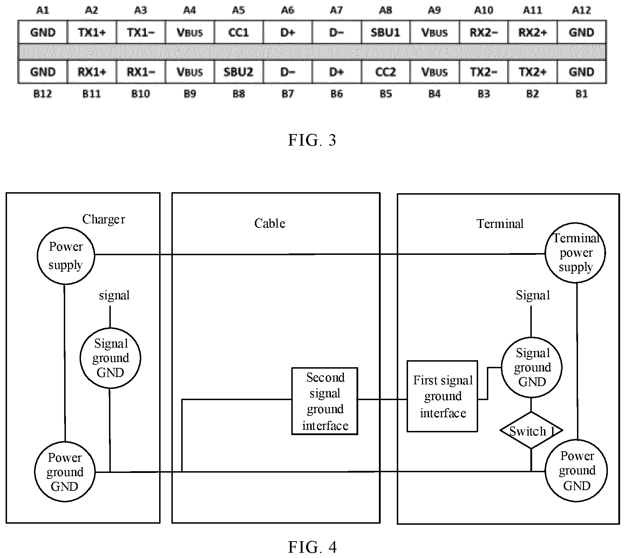

Referring to FIG. 3 which is a schematic structural diagram of a USB Type-C defined interface, A1 and B1 are a pair of GND (Ground, wire ground terminal) pins, A2 is a TX1+ (transport) pin, B2 is a TX2+ pin, A3 is a TX1- pin, B3 is a TX2- pin, A4 and B4 are a pair of Vbus (bus power) pins, A5 and B5 are a pair of CC (Configuration Channel) pins, namely a CC1 pin and a CC2 pin, A6 and B6 are a pair of D+ (Data) pins, A7 and B7 are a pair of D- pins, A8 and B8 are a pair of SBU (Side Band Use) pins, namely a SBU1 pin and a SBU2 pin, A9 and B9 are a pair of Vbus pins, A10 is an RX2-(receive) pin, B10 is an RX1- pin, A11 is an RX2+ pin, B11 is an RX1+ pin, and A12 and B12 are a pair of GND pins.

In an exemplary embodiment, if the SBU1 pin and the SBU2 pin of the USB Type-C defined interface are idle, the idle SBU1 and SBU2 pins are configured as the first signal ground interface.

In another exemplary embodiment, the definitions of a pair of GND pins located at symmetrical positions in the USB Type-C defined interface are modified to be configured as the first signal ground interface. That is, the definitions of the pair of GND pins A1 and B1 are modified to be configured as the first signal ground interface, or the definitions of the pair of GND pins A11 and B12 are modified to be configured as the first signal ground interface. By adopting the pair of GND pins located at the symmetrical positions, insertion of the cable in two plug orientations is facilitated.

In another exemplary embodiment, based on the existing Type-C definitions, that is, based on the USB Type-C defined interface shown in FIG. 3, a preset pin such as A13/B13 is newly added and is defined to be configured as the first signal ground interface.

The second signal ground interface is adapted to the first signal ground interface, and the configuration of the second signal ground interface is similar to that of the first signal ground interface, and thus will not be described in detail here.

In an exemplary embodiment, the terminal further includes a first switch having one side connected to the signal ground of the terminal and the other side connected to the power ground of the terminal.

Considering the compatibility of an ordinary standard Type-C cable, the signal ground GND of the terminal needs to fit the power ground GND of the terminal, so that the first switch is added in the terminal, and a default state of the first switch is a normally-off state. For example, as shown in FIG. 4, the terminal further includes a switch 1 having one side connected to the signal ground GND of the terminal and the other side connected to the power ground GND of the terminal.

When the terminal is charged, in a case where an ordinary standard Type-C cable, i.e., a cable with no second signal ground interface, is adopted, the switch 1 is switched on, at this time, the signal ground GND of the terminal and the power ground GND of the terminal are connected to the same ground, thereby ensuring normal operation of PD communication.

When the terminal is charged, in a case where an improved cable (a non-standard Type-C cable) i.e., a cable including the second signal ground interface, is adopted, the switch 1 is switched off, at this time, the signal ground GND of the terminal is separated from the power ground GND of the terminal, which may prevent a voltage drop of a communication signal of PD communication from being too large, thereby avoiding the problem of charging interruption of the terminal.

In an exemplary embodiment, the terminal further includes a first control module, which is connected to the first switch, and is configured to control on and off of the first switch.

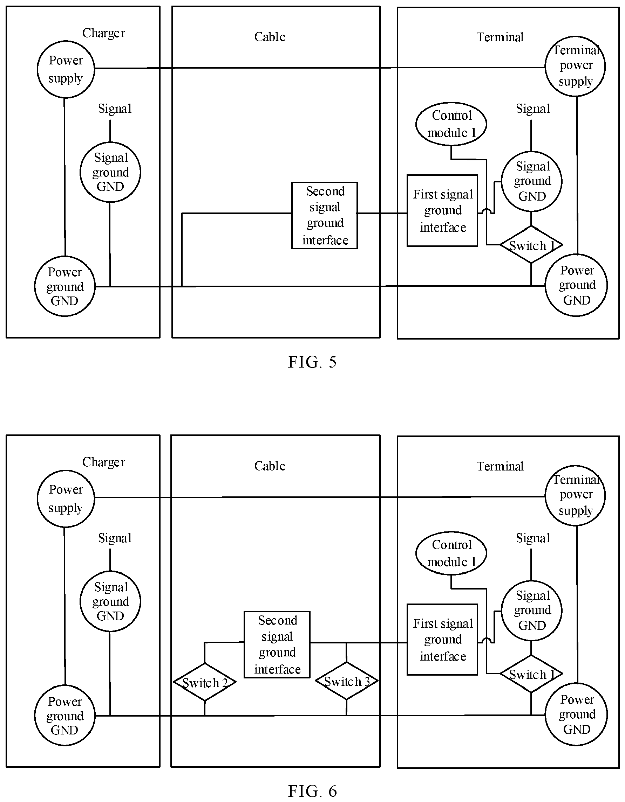

For example, as shown in FIG. 5, the terminal further includes a control module 1 connected to the switch 1. When the terminal is charged, in a case where the ordinary standard Type-C cable is adopted, the control module 1 controls the switch 1 to be switched on. When the terminal is charged, in a case where the improved cable is adopted, the control module 1 controls the switch 1 to be switched off.

In an exemplary embodiment, the cable further includes two second switches provided at two ends of the cable, respectively, one of the second switches is connected to the power ground of the charger, and the other second switch is connected to the power ground of the terminal. When the terminal is charged, the second switch connected to the power ground of the charger is switched on, and the second switch connected to the power ground of the terminal is switched off.

By adding one second switch at each of the two ends of the cable, even if the two ends of the cable are not designed to be fool-proof, it can also be ensured through on and off of the second switches at the two ends of the cable that one end of the cable connected to the charger is kept connected to the power ground GND and the other end of the cable connected to the terminal is kept connected to the signal ground GND. For example, as shown in FIG. 6, the cable further includes a switch 2 and a switch 3, one end of each of the switch 2 and the switch 3 is connected to the second signal ground interface, the other end of the switch 2 is connected to the power ground GND of the charger, and the other end of the switch 3 is connected to the power ground GND of the terminal.

When the terminal is charged, the switch 2 is switched on, the switch 3 is switched off, at this time, the signal ground GND of the terminal is separated from the power ground GND of the terminal, which prevents the voltage drop of the communication signal of PD communication from being too large, thereby avoiding the problem of charging interruption of the terminal.

In an exemplary embodiment, the cable further includes a second control module connected to the two second switches. The second control module is configured to control one of the two second switches to be switched on and control the other second switch to be switched off. When the terminal is charged, the second control module is configured to control the second switch connected to the power ground GND of the charger to be switched on, and control the second switch connected to the power ground GND of the terminal to be switched off.

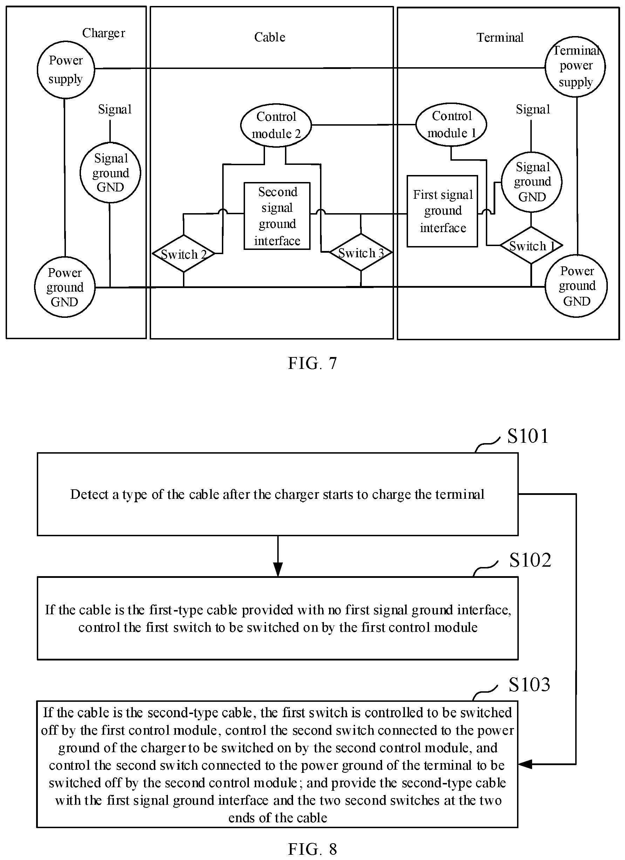

For example, as shown in FIG. 7, the cable further includes a control module 2 connected to the switch 2 and the switch 3. In an exemplary embodiment, the control module 2 is connected to the control module 1 and performs interaction with the control module 1. When the terminal is charged, the control module 1 controls the switch 1 to be switched off, and the control module 2 controls the switch 2 to be switched on and controls the switch 3 to be switched off.

At this time, the signal ground GND of the terminal is separated from the power ground GND of the terminal. In this way, even if the charging current is large, the voltage drop of the communication signal of PD communication does not become too large accordingly, thereby avoiding the problem of charging interruption of the terminal.

The present disclosure further provides a terminal charging method as shown in FIG. 8 which is a flowchart illustrating the terminal charging method according to the present disclosure.

As shown in FIG. 8, the terminal charging method includes operations S101 to S103.

In operation S 101, after the charger starts to charge the terminal, a type of the cable is detected. The cable includes, but is not limited to, a first-type cable and a second-type cable, the first-type cable is provided with no first signal ground interface, and the second-type cable is provided with the first signal ground interface and the two second switches at the two ends of the cable. For example, the first Type of cable is the ordinary standard Type-C cable, and the second cable is the improved non-standard Type-C cable.

In an exemplary embodiment, after the cable is inserted in the charger, an ID chip of the cable and an arithmetic processor perform handshaking, and whether the cable is the first-type cable or the second-type cable is detected with the ID chip. For example, it is detected whether the cable is the ordinary standard Type-C cable or the improved non-standard Type-C cable.

In operation S102, if the cable is the first-type cable, the first switch is controlled to be switched on by the first control module. For example, in a case where the cable is the ordinary standard Type-C cable, current-limiting charging is carried out, and the switch 1 is controlled to be switched on by the control module 1 in the terminal. At this time, the signal ground GND of the terminal and the power ground GND of the terminal are connected to the same ground, so that normal operation of PD communication is ensured, thereby realizing the compatibility of the ordinary standard Type-C cable.

In operation S103, if the cable is the second-type cable, the first switch is controlled to be switched off by the first control module, the second switch connected to the power ground of the charger is controlled to be switched on by the second control module, and the second switch connected to the power ground of the terminal is controlled to be switched off by the second control module; and the second-type cable is provided with the first signal ground interface and the two second switches at the two ends of the cable.

For example, in a case where the cable is the improved non-standard Type-C cable, the switch 1 is controlled to be switched off by the control module 1 in the terminal, the switch 2 connected to the power ground GND of the charger is controlled to be switched on by the control module 2 in the improved non-standard Type-C cable, the switch 3 connected to the power ground GND of the terminal is switched to be switched off by the control module 2 in the improved non-standard Type-C cable. At this time, the signal ground GND of the terminal is separated from the power ground GND of the terminal, which prevents the voltage drop of the communication signal of PD communication from being too large, thereby avoiding the problem of charging interruption of the terminal.

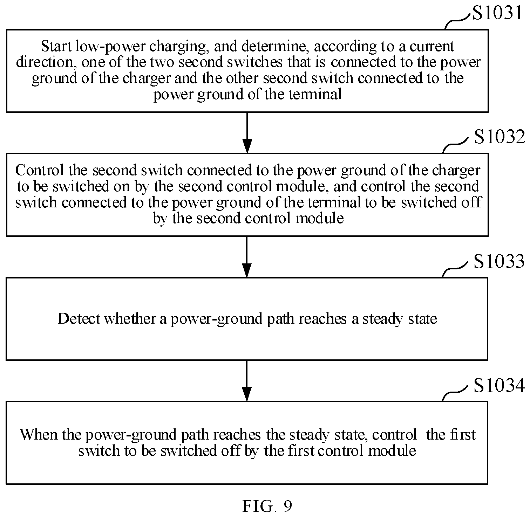

In an exemplary embodiment, as shown in FIG. 9, the operation S103 may include sub-operations S1031 to S1034.

In sub-operation S1031, low-power charging is started, and one of the two second switches that is connected to the power ground of the charger and the other second switch connected to the power ground of the terminal are determined according to a current direction.

For example, in the case where the cable is the improved non-standard Type-C cable, the low-power charging is started, the switch 1 is controlled to be switched on by the control module 1 in the terminal, and both the switch 2 and the switch 3 are controlled to be switched on by the control module 2 in the improved non-standard Type-C cable, so as not to affect the low-power charging function. The voltage drop of the communication signal is small during the low-power charging, so that the charging interruption does not occur.

During the low-power charging, a voltage drop between the power ground GND of the charger and the power ground GND of the terminal is generated at detection points at the two ends of the cable, that is, voltages corresponding to the switch 2 and the switch 3 are different. According to the current direction, whether the switch 2 or the switch 3 is connected to the power ground GND of the charger may be determined, and whether the switch 3 or the switch 2 is connected to the power ground GND of the terminal may also be determined. A point with the lower voltage is closer to the side of the charger, and a point with the higher voltage is closer to the side of the terminal, that is, if the voltage at the switch 2 is low and the voltage at the switch 3 is high, the switch 2 is the one that is connected to the power ground GND of the charger, and the switch 3 is the one that connected to the power ground GND of the terminal. Conversely, if the voltage at the switch 2 is high and the voltage at the switch 3 is low, the switch 3 is the one that is connected to the power ground GND of the charger, and the switch 2 is the one that is connected to the power ground GND of the terminal.

In sub-operation S1032, the second switch connected to the power ground of the charger is controlled to be switched on by the second control module, and the second switch connected to the power ground of the terminal is controlled to be switched off by the second control module.

For example, if it is determined that the switch 2 is the one that is connected to the power ground GND of the charger and the switch 3 is the one that is connected to the power ground GND of the terminal, the switch 2 connected to the power ground GND of the charger is controlled to be switched on by the control module 2 in the cable, and the switch 3 connected to the power ground GND of the terminal is controlled to be switched off by the control module 2 in the cable.

In sub-operation S1033, it is detected whether a power-ground path reaches a steady state.

In an exemplary embodiment, the voltage drop between the power ground GND of the charger and the power ground GND of the terminal at the detection points at the two ends of the cable is detected, that is, a voltage drop between the switch 2 and the switch 3 is detected, if the voltage drops detected for a plurality of times are the same, that is, the voltage drops are kept stable, it is determined that the power-ground path corresponding to the charger and the terminal reaches the steady state.

In sub-operation S 1034, when the power-ground path reaches the steady state, the first switch is controlled to be switched off by the first control module.

When it is determined that the power-ground path corresponding to the charger and the terminal reaches the steady state, the switch 1 is controlled to be switched off by the control module 1 in the terminal, so as to separate the signal ground GND of the terminal from the power ground GND of the terminal.

In an exemplary embodiment, after controlling the first switch to be switched off by the first control module after the power-ground path reaches the steady state, the terminal charging method may include starting high-power charging.

That is, after the signal ground GND of the terminal is separated from the power ground GND of the terminal, the high-power charging is started. Thus, even if the charging current is large, the charging interruption due to the increase of the voltage drop of the communication signal is not incurred.

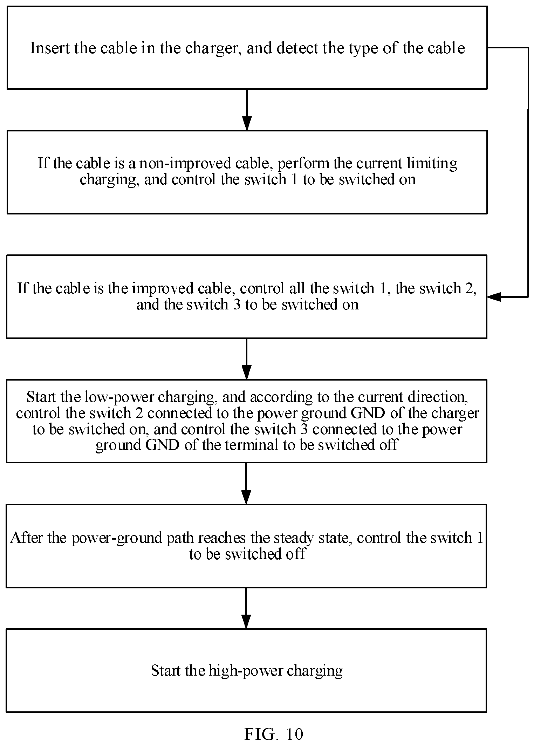

Referring to FIG. 10 which is a flowchart of a terminal charging process, based on the terminal charging system shown in FIG. 7, a specific terminal charging process is as follows: A1) inserting the cable in the charger, and detecting the type of the cable; A2) if the cable is a non-improved cable (i.e., the ordinary standard Type-C cable), performing the current limiting charging, and controlling the switch 1 to be switched on, which is the same as a terminal charging method in the existing art; A3) if the cable is the improved cable (i.e., the non-standard Type-C cable), controlling all the switch 1, the switch 2, and the switch 3 to be switched on to not affect the low-power charging function; A4) starting the low-power charging, and according to the current direction, controlling the switch 2 connected to the power ground GND of the charger to be switched on, and controlling the switch 3 connected to the power ground GND of the terminal to be switched off; A5) after the power-ground path reaches the steady state, controlling the switch 1 to be switched off, so as to separate the signal ground GND from the power ground GND; and A6) starting the high-power charging.

In the terminal charging method provided by the above embodiments, after the charger starts to charge the terminal, the type of the cable is detected, and if the cable is the first-type cable (provided with no first signal ground interface), the first switch is controlled to be switched on by the first control module to perform the current limiting charging; if the cable is the second-type cable (provided with the first signal ground interface and the two second switches at the two ends of the cable), the first switch is controlled to be switched off by the first control module, the second switch connected to the power ground of the charger is controlled to be switched on by the second control module, and the second switch connected to the power ground of the terminal is controlled to be switched off by the second control module, at this time, the signal ground of the terminal is separated from the power ground of the terminal. Thus, even if the charging current is large, the voltage drop of the signal does not become too large accordingly, thereby avoiding the problem of charging interruption of the terminal.

The present disclosure further provides a storage medium used for computer-readable storage. The storage medium has stored therein one or more programs that may be executable by one or more processors to perform any operation of the terminal charging method provided herein.

The storage medium may be an internal storage unit of the terminal charging system described in the aforesaid embodiments, for example, the storage medium is a hard disk or a memory of the terminal charging system. The storage medium may also be an external storage device of the terminal charging system, for example, the storage medium is a plug-in hard drive, a Smart Media Card (SMC), a Secure Digital (SD) card, or a flash card which is provided in the terminal charging system.

It should be understood by those of ordinary skill in the art that the functional modules/units in all or some of the operations, the systems and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium), and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure provides a terminal charging system, a terminal charging method, and a storage medium. The terminal charging system includes the terminal, the cable, and the charger; the terminal includes the first signal ground interface configured to be connected to the signal ground of the terminal, the cable includes the second signal ground interface adapted to the first signal ground interface, and when the charger charges the terminal, one end of the cable is connected to the power ground of the charger, the other end of the cable is connected to the signal ground of the terminal through the first signal ground interface and the second signal ground interface which are connected to each other, thus realizing the separation of the signal ground of the terminal from the power ground of the terminal. In this way, even if the charging current is large, the voltage drop of the communication signal does not become too large accordingly, thereby avoiding the problem of charging interruption of the terminal. The technical solutions of the present disclosure can avoid the charging interruption of the terminal during the high-power charging process.

It should be understood that the term "and/or" used in the description and the appended claims of the present disclosure refers to any combination and all possible combinations of one or more listed associated items, and includes all those combinations. It should be noted that, in the present disclosure, the terms "includes", "comprises" or any other variation thereof are intended to indicate a non-exclusive inclusion, so that a process, method, article, or system, which includes a series of elements, does not only include those elements but also include other elements which are not explicitly listed, or the elements inherent in such process, method, article, or system. If there are no more limitations, limiting an element by "including a..." does not exclude the existence of other identical elements in the process, method, article, or system which includes the element.

The ordinal numbers of the above embodiments of the present disclosure are merely for description, and do not indicate a preferential order of the embodiments. The above description is of the specific embodiments of the present disclosure, but the protection scope of the present disclosure is not limited thereto. Those ordinary skills in the art can easily think of various equivalent changes or substitutions within the technical scope disclosed by the present disclosure, and the changes or substitutions should be included in the protection scope of the present disclosure. Therefore, the protection scope of the present disclosure should be subject to the protection scope of the claims.

## Claims

1. A terminal charging system, comprising:
a terminal including a first signal ground interface configured to be connected to a signal ground of the terminal;
a cable including a second signal ground interface adapted to the first signal ground interface; and
a charger which charges the terminal through the cable;
wherein when the terminal is charged, one end of the cable is connected to a power ground of the charger, and the other end of the cable is connected to the signal ground of the terminal through the second signal ground interface and the first signal ground interface.

2. The terminal charging system of claim 1, wherein the first signal ground interface is configured by a SBU1/SBU2 pin of a Universal Serial Bus Type-C, USB Type-C, defined interface, or the first signal ground interface is configured by a pair of Ground, GND, pins located at symmetrical positions of the USB Type-C defined interface; or the first signal ground interface is configured by a preset pin newly added to the USB Type-C defined interface.

3. The terminal charging system of claim 1, wherein the terminal further comprises a first switch having one side connected to the signal ground of the terminal and the other side connected to a power ground of the terminal.

4. The terminal charging system of claim 3, wherein the terminal further comprises a first control module connected to the first switch and configured to control on and off of the first switch.

5. The terminal charging system of claim 4, wherein the cable further comprises two second switches provided at two ends of the cable, respectively, one of the second switches is connected to the power ground of the charger, and the other second switch is connected to the power ground of the terminal.

6. The terminal charging system of claim 5, wherein the cable further comprises a second control module connected to the two second switches and configured to control a second switch connected to the power ground of the charger to be switched on and control the second switch connected to the power ground of the terminal to be switched off when the terminal is charged.

7. A terminal charging method applied to the terminal charging system of claim 6, comprising:
detecting a type of the cable after the charger starts to charge the terminal;
if the cable is a first-type cable, controlling the first switch to be switched on by the first control module, wherein the first-type cable is provided with no first signal ground interface; and
if the cable is a second-type cable, controlling the first switch to be switched off by the first control module, controlling the second switch connected to the power ground of the charger to be switched on by the second control module, and controlling the second switch connected to the power ground of the terminal to be switched off by the second control module, wherein the second-type cable is provided with the first signal ground interface and the two second switches located at the two ends of the cable.

8. The terminal charging method of claim 7, wherein controlling the first switch to be switched off by the first control module, controlling the second switch connected to the power ground of the charger to be switched on by the second control module and controlling the second switch connected to the power ground of the terminal to be switched off by the second control module comprises:
starting low-power charging, and determining the second switch connected to the power ground of the charger and the second switch connected to the power ground of the terminal according to a current direction;
controlling the second switch connected to the power ground of the charger to be switched on by the second control module, and controlling the second switch connected to the power ground of the terminal to be switched off by the second control module;
detecting whether a power-ground path reaches a steady state; and
controlling the first switch to be switched off by the first control module when the power-ground path reaches the steady state.

9. The terminal charging method of claim 8, wherein, after controlling the first switch to be switched off by the first control module, the method comprises:
starting high-power charging.

10. A storage medium for computer-readable storage, wherein the storage medium has stored therein one or more programs that are executable by one or more processors to perform operations of the terminal charging method of any one of claims 7 to 9.
